# EUROPEAN PATENT APPLICATION

(11) **EP 1 058 111 A2**
(43) Date of publication of application: **06.12.2000**
(21) Application number: 00401435.3
(22) Date of filing: 23.05.2000
(51) Int. Cl.: G01N 21/89, G01N 21/95

(54) **Optical inspection system and method**

(30) Priority: 24.05.1999 IL 13008799; 10.02.2000 US 501230
(71) Applicant: Nova Measuring Instruments Limited, Rehovot 76100 (IL)
(72) Inventor: Finarov, Moshe, Rehovot 7609 (IL); Levinsohn, Natalie, Beit Elizer, Hadera 38481 (IL); Ghilai, Shav, Tel-Aviv 69352 (IL)
(74) Representative: Desaix, Anne

(57) **Abstract**

An optical inspection system (12, 112) is presented, aimed at detecting defects on a substantially flat workpiece (W) having an axis of symmetry (OP). The workpiece is supported on a stage (18) so as to be in an inspection plane (IP), the stage being mounted for rotation in a plane parallel to the inspection plane. A scanning apparatus (16) is accommodated above the workpiece, and comprises an illumination assembly (24), a plurality of optical assemblies (OA), and a plurality of area sensors (AS). The illumination assembly produces a plurality of incident radiation components for illuminating a strip (S) on the workpiece extending parallel to the axis symmetry between two opposite sides thereof. The optical assemblies are aligned along the axis of symmetry in a spaced-apart parallel relationship, and are mounted for reciprocating movement within a plane parallel to an inspection area (IA) that covers substantially a half of the workpiece. The area sensors are arranged in a predetermined manner, each area sensor being associated with a corresponding one of the optical assemblies for receiving a component of returned radiation and generating data representative thereof. The half of the workpiece is strip-by-strip inspected, then the stage with the workpiece is rotated by 180° and the other half of the workpiece is strip-by-strip inspected.

## Description

### FIELD OF THE INVENTION

The present invention is in the field of automatic inspection techniques, and relates to an optical inspection method and system, particularly useful for inspecting semiconductor wafers progressing on a production line.

### BACKGROUND OF THE INVENTION

The manufacture of semiconductor devices consists of a multi-staged process requiring wafers progressing on a production line to be inspected between sequential manufacturing steps. One of the principle processes in the manufacture of semiconductor devices is the photolithography process. It consists of patterning the wafer's surface in accordance with the active elements of semiconductor devices to be manufactured. The photolithography process includes the following main operational steps:
a. Coating the wafer with a photoresist material;
b. Exposing the photoresist material through a mask with a predetermined pattern in order to produce a latent image of the mask on the photoresist material; and
c. Developing the exposed photoresist material in order to produce the image of the mask on the wafer.

Generally speaking, prior to the photolithography process, the wafer is prepared for the deposition of one or more layers. After the completion of the photolithography process, the uppermost layer of the wafer is etched. Then a new layer is deposited, in order to start the photolithography and etching operations again. In this repetitive manner, a multi-layer semiconductor wafer is produced.

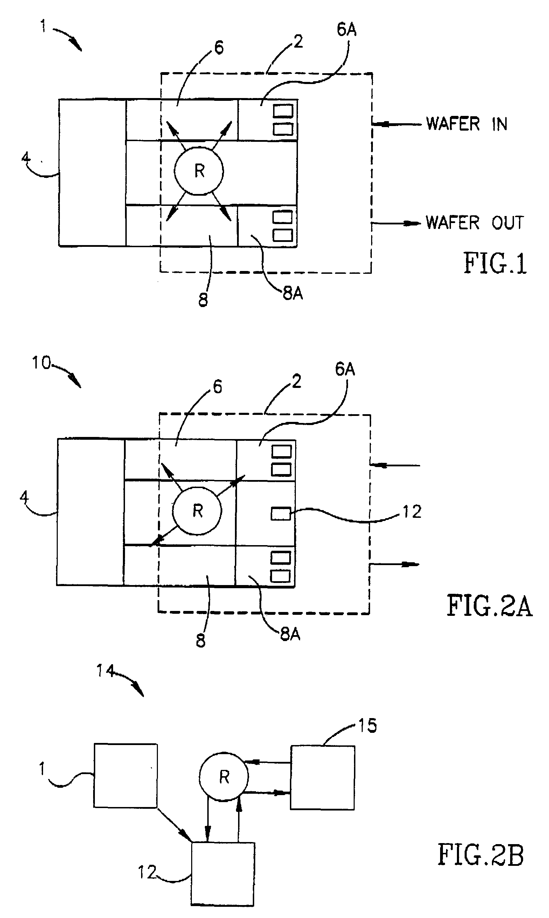

Fig. 1 illustrates a block diagram of a typical photocluster **1** used for performing the photolithography process in semiconductor fabrication plants (FABs). The photocluster **1** (or link) is composed of two main parts: a phototrack **2** and an exposure tool **4.** The phototrack **2** includes a coater track **6** associated with a cassette load station **6a**, and a developer track **8** associated with a cassette unload station **8a**. Alternatively, both coating and developing functions may be combined and realized in a common station. A load/unload robot **R** is mounted for movement within the photocluster **1** for conveying wafers **W** to and from the photocluster tools. The coater track **6**, the exposure tool **4** and the development track **8** are tightly joined together in order to minimize process variability and any potential risk of contamination during photolithography, which is a super sensitive process.

It is apparent that in such a complex and delicate production process various problems, failures or defects may arise or develop during each manufacturing step or from the serial combination of steps. Due to the stringent quality requirements, any defect which is not timely detected, may result in the rejection of a single wafer or the entire lot. The wafer cannot be taken out of the photocluster tools set-up for measurement or inspection before the entire photolithography process is completed and the wafer arrives at the cassette station **8a**. The wafers are typically inspected at a stand-alone monitoring system (CD-SEM) which is installed outside the production line, and to which the wafers are transferred by means of a separate handling system. This reduces the throughput of the production line.

A manual inspection technique is conventionally used for inspecting the wafers for so-called macro lithography defects, such as scratches or foreign particles of dust and dirt. Generally, macro defects are considered as defects having tenths of micrometers in size. The manual inspection technique utilizes the visual examination of the wafer's surface by an operator using intense light and magnification. This inspection is inconsistent and unreliable, since the results vary significantly amongst operators, due to the wafer's complexity and depending on the operators' experience. About 80% of the photo-related defects remain undetected. Manual inspection has low throughput, and could not be performed within the FAB tools. Manual inspection is not cost effective.

Various automatic inspection systems have been developed. They utilize either a line CCD camera or an area CCD camera. The basic problem with line type detectors is their non-effective use of illuminating radiation. This is owing to the fact that a strip illuminated on the surface of the wafer under inspection is substantially wider than the width of the field of view of a line CCD camera. Additionally, the line CCD based technique suffers from a complicated mechanical arrangement needed for moving the line CCD camera along the **X**- and **Y**- axes relative to the wafer under inspection. Moreover, different resolutions are achieved in the **X**- and **Y**- directions, due to the movement of the image during scanning.

As for the area sensor based technique, it utilizes a so-called step-and-repeat mode of operation, wherein the camera and the wafer are mounted for movement relative to each other to cover the entire surface of the wafer. More specifically, the camera and the wafer are moved step-by-step, and images are acquired upon the camera or the wafer stops. This technique requires a quite complicated mechanical stage providing movement along two mutually perpendicular axes. Additionally, it results in low throughput due to a great number of movement steps, and requires an additional footprint for performing such a two-dimensional movement.

Machine vision systems having multiple cameras have been developed, being disclosed, for example, in U.S. Patent No. 5,768,443. In this system, images are acquired simultaneously by a plurality of cameras. The fields of view of the cameras cover a relatively large area of the wafer under inspection, thereby increasing the throughput of the system, as compared to the techniques utilizing a single line or area sensor. However, this patent does not present any example of the cameras' arrangement, which would be useful in an integrated inspection. An inspection machine should be inexpensive, simple to erect and maintain, and should have a small footprint (like a wafer cassette) to meet the requirements of the integrated inspection.

Laser inspection systems have been developed which utilize various types of scanners and collectors for scanning the wafer's surface during the translational movement and for collecting light reflective and scattered from the surface. Such systems are disclosed, for example, in U.S. Patent Nos. 4,630,276; 5,108,176; 5,127,726 and 5,712,701. Unfortunately, these systems are complicated and expensive. Since they use monochromatic laser illumination, they are non-effective and insufficient for the inspection of developed photoresist for macro defects.

### SUMMARY OF THE INVENTION

There is accordingly a need to facilitate the automatic inspection of workpieces progressing on a production line, by providing a novel system and method for the optical inspection of such workpieces.

It is a major feature of the invention that the optical inspection system may be integrated into the production line. It is simple, inexpensive and compact, and provides for inspection with a high throughput of workpieces.

The main idea of the present invention is based on the following. A semiconductor wafer is typically a substantially flat workpiece, having an axis of symmetry (i.e. is round). Consequentially, one half of the wafer can be inspected by appropriately moving respective parts of a scanning apparatus above it, and, upon rotating the wafer about its axis of symmetry by 180°, inspecting the other half of the wafer. Hence, suitable mechanics should be provided for moving the respective components of the scanning apparatus solely within an inspection area equal to the half of the wafer, rather than moving them above the entire wafer, or moving both the respective components and the wafer relative to each other. This significantly simplifies the mechanical equipment of the entire system, as well as its footprint, and enables the use of a robot typically installed in the production line for conveying wafers to and from a plurality of stations. To scan the half of the wafer (inspection area), a plurality of optical assemblies is mounted for movement above the wafer within the inspection area, the optical assemblies being aligned in a line parallel to the axis of symmetry of the wafer between the opposite sides thereof. A plurality of sensors is provided, each sensor being associated with a corresponding one of the plurality of optical assemblies. Thus, an illuminated strip extending along the entire width of the wafer is inspected at each location of the plurality of optical assemblies relative to the wafer.

There is thus provided, according to one aspect of the present invention, an optical inspection system for detecting defects on a substantially flat workpiece having an axis of symmetry, the system comprising a stage supporting said workpiece in an inspection plane, and a scanning apparatus accommodated above said workpiece, wherein:
**(a)** said stage is mounted for rotation in a plane parallel to said inspection plane;
**(b)** said scanning apparatus comprises:
   an illumination assembly producing a plurality of incident radiation components, each component illuminating a corresponding one of a plurality of regions of the workpiece within a strip illuminated by said plurality of incident radiation components, the strip extending parallel to the axis of symmetry of the workpiece between two opposite sides thereof;
   a plurality of optical assemblies accommodated above said workpiece, each optical assembly directing a corresponding one of a plurality of radiation components returned from the corresponding illuminated region away from the workpiece, wherein the optical assemblies are aligned along said axis of symmetry in a spaced-apart parallel relationship and mounted for reciprocating movement within a plane parallel to an inspection area, said inspection area covering substantially a half of the workpiece;
**(c)** a plurality of area sensors are arranged in a predetermined manner, each area sensor being associated with a corresponding one of the optical assemblies for receiving the component of the returned radiation and generating data representative thereof;
**(d)** a first drive mechanism is coupled to said optical assemblies for driving said reciprocating movement thereof; and
**(e)** a second drive mechanism is coupled to said stage for driving said rotation thereof.

The illumination assembly may operate in bright-field illumination mode. In this case, it comprises a plurality of stationary mounted light sources aligned corresponding to the alignment of the optical assemblies, each incident radiation component being directed on the corresponding optical assembly, which, in turn, directs it onto the corresponding region of the workpiece.

Alternatively, or additionally, the illumination assembly may operate in a dark-filed illumination mode. In this case, it includes either a plurality of light sources, each accommodated in the vicinity of the corresponding optical assembly, or an elongated light source, extending along the optical assemblies in the proximity thereof. This "dark-field" illumination assembly is mounted for movement together with the optical assemblies. If the dark-field light illumination is used in addition to the bright-field illumination, the operation of the stationary mounted light sources and the operation of the movable light sources are time separated. For example, the stationary mounted light sources may be continuously operated, while the movable light sources are selectively actuated to inspect only those locations on the workpiece where either a potential defect has been detected during the bright-field mode, or a real defect is expected.

The area sensors may be arranged in a line parallel to the axis of symmetry and associated with the optical assemblies, so as to move together with the optical assemblies. Alternatively, the area sensors may be arranged in two parallel lines, parallel to the axis of symmetry, wherein each two adjacent sensors are displaced from each other along two mutually perpendicular axes. In this case, an additional light directing assembly is provided for receiving the components of the returned radiation ensuing from the optical assemblies, and directing them onto to the area sensors.

According to another aspect of the present invention, there is provided a photolithography tools arrangement for processing a stream of substantial flat workpieces progressing on a production line, which tools arrangement comprises an optical inspection system constructed as described above.

According to yet another aspect of the present invention, there is provided a method for inspecting a substantial flat workpiece having an axis of symmetry, the method comprising the steps of:
(i) locating the workpiece within an inspection plane;
(j) illuminating a plurality of regions of the workpiece by a plurality of incident radiation components and producing a plurality of light components returned from the plurality of illuminated regions, the illuminated regions forming an illuminated strip extending parallel to the axis of symmetry between two opposite sides of the workpiece;
(k) directing each of the plurality of light components returned from the illuminated regions through a plurality of optical assemblies aligned in a line parallel to the axis of symmetry above the workpiece;
(l) detecting light components returned from the illuminated regions by a corresponding plurality of area sensors;
(m) moving said plurality of optical assemblies relative to said workpiece within a plane parallel to the inspection plane, such as to illuminate successive strips on the workpiece and detect light components returned therefrom;
(n) repeating steps (j) to (m) for strip-by-strip inspection of the workpiece within an inspection area that covers substantially a half of the workpiece;
(o) rotating said workpiece by 180° and repeating steps (j) to (n).

More specifically, the present invention is used for inspecting wafers progressing within a photolithography tools set-up, and is therefore described below with respect to this application.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** schematically illustrates a block diagram of the main components of the conventional photocluster;
**Figs. 2a and 2b** schematically illustrate by way of a block diagram two different examples, respectively, of a photolithography arrangement including an optical inspection system according to the present invention;
**Figs. 3a and 3b** schematically illustrate the main components of the optical inspection system of either of Figs. 2a or 2b, constructed according to one embodiment of the invention;
**Figs. 4a and 4b** illustrate two possible examples of implementation of an illumination assembly of the system of Fig. 3 operating in a dark-field illumination mode;
**Figs. 4c to 4f** illustrate another possible example of a dark-field illumination assembly;
**Figs. 4g and 4h** illustrate yet another possible example of a dark-field illumination assembly;
**Figs. 5a and 5b** illustrated two different examples, respectively, of a scanning technique suitable to be used in the present invention;
**Fig. 6** schematically illustrates the main components of the optical inspection system of either of Figs. 2 or 3, constructed according to another embodiment of the invention;
**Fig. 7** more specifically illustrates an arrangement of sensors of the system of Fig. 6;
**Figs. 8a and 8b** more specifically illustrate a light directing assembly of the system of Fig. 6;
**Figs. 9a and 9b** illustrate two different examples, respectively, of the illumination assembly suitable for use in the system of either of Figs. 3a-3b or 6; and
**Fig. 10** illustrates more specifically some features of the scanning apparatus of Figs. 3a-3b.

### DETAILED DESCRIPTION OF A PREFERRED EMBODIMENT

Fig. 1 illustrates the configuration of the conventional photocluster **1**, which comprises the phototrack **2** and the exposure tool **4**, wherein the photo track is composed of the water track **6** and the developer track **8**. The water and developer tracks have their associated cassette load and unload stations **6a** and **8a**, respectively. The cassettes containing wafers are supplied to the phototrack **2**, being loaded from the station **6a** onto the coater track **6**. Here, a photoresist material is deposited onto the wafer's surface, and then the robot R transmits the coated wafer to the exposure tool **4**. The photoresist coating is exposed to light through a mask having a predetermined pattern to produce a latent image of the mask on the photoresist coating. Thereafter, the robot **R** transmits the wafer to the developer track **8** for developing the latent image.

Referring to Fig. 2a, there is illustrated a photocluster **10** (constituting a photolithography tools arrangement) constructed according to one example of the invention. The same reference numbers are used for identifying those components which are common in the photoclusters **1** and **10**, to facilitate understanding. As shown, the photocluster **10** is constructed generally similar to the conventional photocluster **1**, but comprises an optical inspection system **12**, constructed and operated according to the invention, as will be described further below. The optical inspection system **12** is compact so as to be easily installed within the conventionally designed photocluster, enabling the use of the same robot **R** for feeding and discharging the wafers to and from the inspection system **12**. The system **12** may be dimensioned and shaped similar to that of the conventional cassette. Generally, the exact location of the inspection system **12** within the photocluster is selected in accordance with the considerations and circumstances of a specific manufacturer, an available foot-print inside the phototrack and the FAB considerations. Since the inspection system **12** is extremely compact, it can be positioned at a cassette location in the unloading area, or any other location accessible for the load/unload robot **R**.

Fig. 2b illustrates a photolithography tools arrangement **14**, constructed according to another example of the invention. The arrangement **14** utilizes the photocluster **1** and the optical inspection system **12**, which is installed as a stand-alone unit within the photolithography tools arrangement **14** similar to the wafers' load/unload cassette station **15**. The robot **R** conveys wafers from the cassette **15** to the inspection system **12** and returns the inspected wafers back to the cassette station **15**, and supplies and discharges wafers to and from the photocluster **1**.

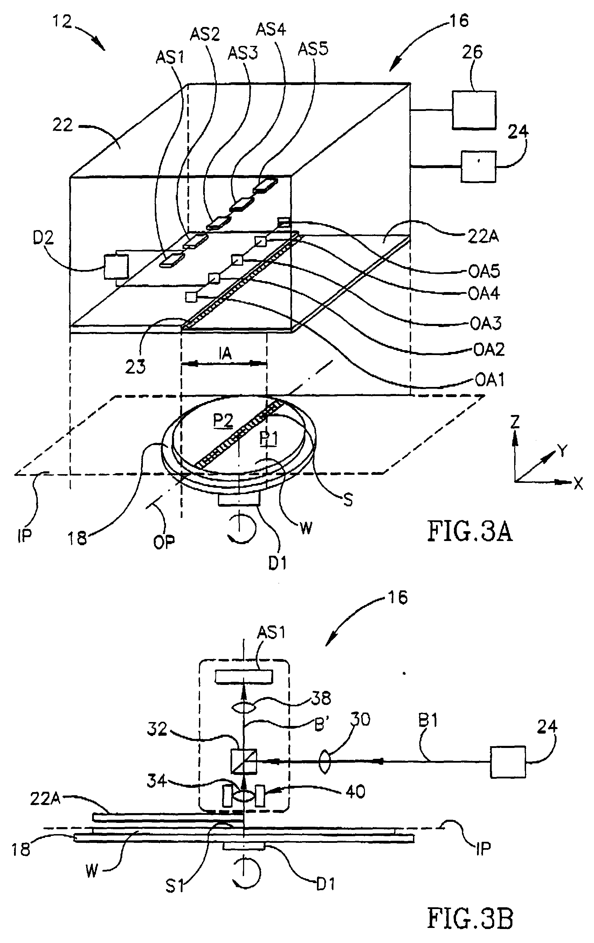

Fig. 3a illustrates the main constructional parts of the optical inspection system **12**, constructed according to one embodiment of the invention. The inspection system **12** comprises a scanning apparatus **16** for inspecting a wafer **W** located on a support stage **18**, which supports the wafer **W** in an inspection plane **IP**. The wafer **W** has an axis of its symmetry **OP** defining half-parts **P**_{**1**} and **P**_{**2**} of the wafer **W** at opposite sides of the axis **OP**. Coupled to the stage **18** is a first drive mechanism **D**_{**1**} for driving the rotational movement of the stage **18** within a plane parallel to the inspection plane **IP**.

The scanning apparatus **16** inspects the wafer **W** within an inspection area **IA** defined by the half **P**_{**1**} of the wafer, as will be described more specifically further below. Then, the drive mechanism **D**_{**1**} operates to rotate the stage **18** by 180°, thereby locating the other half **P**_{**2**} of the wafer within the inspection area **IA**.

The scanning apparatus **16** comprises a sealed housing **22** containing a plurality of optical assemblies, for example five optical assemblies **OA**_{**1**}**-OA**_{**5**}, and a corresponding plurality of area sensors **AS**_{**1**}**-AS**_{**5**}. An illumination assembly **24** and a control unit **26** are accommodated outside the housing **22**. The housing **22** is formed with an optically transparent bottom portion **22a** (i.e., window) substantially covering the inspection area **IA** (one half of the wafer). A second drive mechanism **D**_{**2**} is accommodated inside the housing so as to be outside the inspection area **IA**. The drive mechanism **D**_{**2**} is associated with the optical assemblies **OA**_{**1**}**-OA**_{**5**} and with the area sensors **AS**_{**1**}**-AS**_{**5**} for driving a reciprocation movement thereof along the **X**-axis within the inspection area **IA**. It is understood, although not specifically shown, that a suitable guiding assembly is provided for slidingly supporting the moving parts (i.e., optical assemblies and area sensors) inside the housing **22**.

The optical assemblies **OA**_{**1**}**-OA**_{**5**} are accommodated above the window **22a** being aligned along the **Y**-axis parallel to the axis of symmetry **OP** in a spaced-apart parallel relationship between the opposite sides of the wafer. The sensors **AS**_{**1**}**-AS**_{**5**} are arranged like a "rule" extending along the **Y**-axis and spaced from the optical assemblies along the **Z**-axis.

The construction and operation of the control unit **26** do not form part of the present invention and may be of any known suitable kind, and therefore need not be specifically described, except to note the following. The control unit **26** includes several suitable utilities. Some of them are associated with the sensors **AS**_{**1**}**-AS**_{**5**} for receiving and analyzing data representative of radiation returned from the wafer **W**, and the other are associated with the driver assemblies **D**_{**1**} and **D**_{**2**} for synchronizing the movements of the stage **16** and moving components of the scanning apparatus. The control unit **26** is typically a computer device comprising a suitable pattern recognition software and a translation means so as to be responsive to data representative of the radiation returned from the wafer **W** and locate defects, if any. This software generates a gray level bit map of the acquired images, which may, for example, be stored in a memory. Generally speaking, the analyzing of the obtained data is performed in a die-to-die, die-to-many dies or die-to-database manner. The control unit **26** and the illumination assembly **24** are located outside the area occupied by the photocluster **1**.

It should be noted that to facilitate the image processing, pre-alignment of the wafer **W** could be provided. When the wafer **W** is set on to the stage **18**, the control unit **26** may operate the driver assemble **D**_{**1**} to rotate the wafer **W**, and operate the periphery sensors, e.g. **AS**_{**1**} and **AS**_{**5**}, along with the corresponding illuminating assemblies, to acquire images of the wafer's edge and analyze them, so as to detect a registration mark, i.e., "notch" or "flat". After the notch or flat is detected, the wafer could be turned so as to provide desired orientation of the main wafer direction. Preferably, the main wafer direction coincides with the **X**-axis, i.e., with the direction of movement of the optical assemblies **OA**_{**1**}**-OA**_{**5**}.

Fig. 3b schematically illustrates the main operational principles of the system **12**. The beam propagation is shown here schematically to facilitate the illustration. The illumination assembly **24** comprises a suitable number of light sources or a single light source equipped with suitable light splitting means, capable of producing a plurality of incident light components. A corresponding number of lenses **30** are stationary mounted inside the housing **22** being aligned according to that of the optical assemblies. Each incident light component impinges onto a corresponding one of the optical assemblies (five in the present example), the component **B**_{**1**} associated with the optical assembly **OA**_{**1**} being seen in Fig. 3b. The optical assembly **OA**_{**1**} comprises a beam splitter **32** and an objective lens assembly including *inter alia* a field lens **34**. The area sensor **AS**_{**1**} is associated with an imaging tube lens **38**.

The beam splitter **32** directs the incident light component **B**_{**1**} onto the objective lens assembly (only the field lens **34** thereof being shown here), which, in turn, focuses the light component **B**_{**1**} onto a region **S**_{**1**} on the wafer. A light component **B**_{**1**}**'** returned from the illuminated region **S**_{**1**} is directed onto the lens **38** by the beam splitter **32**. It is understood, although not specifically shown, that regions illuminated by all the incident light components via the optical assemblies **OA**_{**1**}**-OA**_{**5**} form together the illuminated strip **S** extending parallel to the diameter of the wafer **W**. Hence, whilst step-by-step moving the optical assemblies and area sensors from the center region of the wafer towards its periphery region along the **X**-axis, the half of the wafer located within the inspection area **IA** is strip-by-strip inspected. At each relative location of the moving elements relative to the wafer, each of the sensors **AS**_{**1**}**-AS**_{**5**} acquires an image of the illuminated region **S**_{**1**} and generates data representative thereof. The respective utilities of the control unit **26** receive and analyze these data to locate defects, if any, within the entire illuminated strip **S** composed of the regions **S**_{**1**}**-S**_{**5**}.

The illumination assembly **24** operates in a so-called "bright-field illumination" mode. As further shown in Fig. 3b, the scanning apparatus **18** comprises an additional illumination assembly **40** mounted inside the housing **22** for the purpose to move together with the optical assemblies **OA**_{**1**}**-OA**_{**5**} and sensors **AS**_{**1**}**-AS**_{**5**} within the inspection area **IA**.

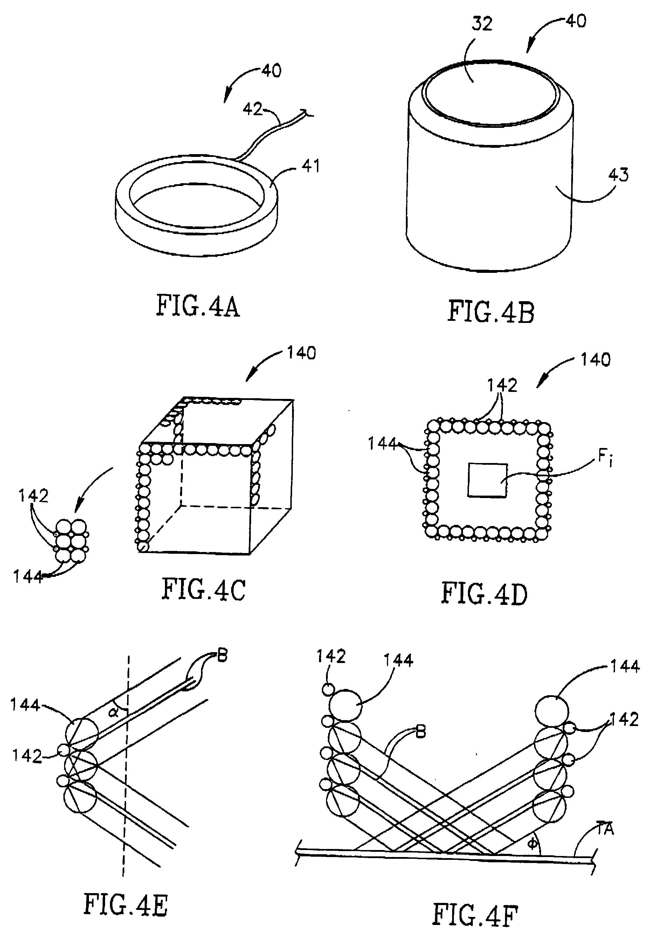

Figs. 4a and 4b illustrate one possible design for the illumination assembly **40**. In both examples, the illumination assembly **40** is composed of a corresponding number of light sources, each associated with a corresponding one of the optical assemblies (not shown here). According to the example of Fig. 4a, such a light source is designed like a ring **41** formed by a plurality of LEDs or optical fibers (not shown). In the case of optical fibers, an external light source (not shown) associated with a fiber bundle **42** may be used. The ring **41** would enclose the corresponding field lens (not shown). In the example of Fig. 4b, the light source is designed like a cylinder **43**, which also may be formed by a plurality of LEDs. It should, however, be noted that the illumination assembly **40** may include either a single elongated light source mounted in the proximity of the field lenses **34** of the optical assemblies so as to extend along the **Y**-axis, or a pair of such elongated light sources mounted at opposite sides of the optical assemblies.

Turning now to Figs. 4c-4f, there is illustrated another possible design of a dark-field illumination assembly **140**, aimed at providing the illumination of each region on the wafer at substantially 45°-angle between the vertical plane defined by the average direction of the incident beam propagation and those of the pattern (as seen from the top). This is associated with the fact that a pattern on the wafer is typically arranged in the so-called "streets-and-avenues" manner, and the illumination at 45°-azimuth angle, α, enables to eliminate or at least significantly reduce the undesirable diffraction effects caused by the pattern.

As shown in Fig. 4c, the illumination assembly **140** is in the form of a corresponding number of light sources, each in the form of a rectangular frame carrying a plurality of light emitting elements **142** (e.g., LEDs) and a plurality of identical transparent ball-like lenses **144** for directing emitting light towards the inspection plane. It should, however, be noted that generally the lens **144** may be of another suitable shape, being shaped like a ball in the present example. The balls **144** are arranged in rows and columns so as to form four sides of the rectangular frame, such that contact is provided between each two adjacent balls. Each of the light emitting elements is located in the corresponding one of the spaces formed between the balls. The ball **144** has the diameter of about 3mm, and is made either from glass or optical-quality plastic. The light source **142** is about 0.3mm in size.

As shown in Fig. 4d, the projection of a field of view **F**_{**i**} of the corresponding sensor **AS**_{**1**} is located in the center of the horizontal plane defined by the rectangular frame **140** enclosing the field of view **F**_{**i**}. The length of the frame's wall is about 1.5-2 times larger than that of the field of view **F**_{**i**} of the area sensor.

Figs. 4e and 4f partly show top and side views, respectively, of the balls-LEDs assembly **140**. Each ball **144** serves as a lens accommodated in the optical path of a light beam **B** emitted by the corresponding LED **142**. The light beams **B** propagate through the corresponding balls **144** and, whilst ensuing therefrom, become directed onto the wafer **W** at 45°-azimuth angle. To this end, the emitting surface of the LED is appropriately oriented with respect to the corresponding balls, and is located in the focus plane thereof. It should be noted that the 45°-angle provided by the LED-balls assembly is the azimuth angle, while an elevation angle, θ, may be different. The term *"elevation angle"* used herein is the angle between the incident beam and the wafer's plane as seen from the side.

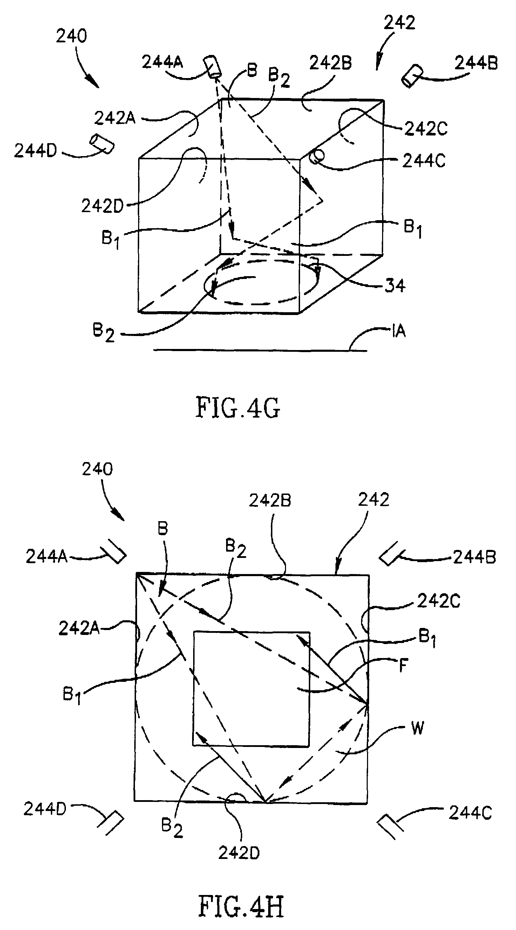

Referring to Figs. 4g and 4h, there is illustrated yet another possible design of a dark-field illumination assembly, generally designated **240**, aimed at providing the illumination with the substantially 45°-angle. This example presents a so-called "retro-reflective scheme". The illumination assembly **240** comprises a plurality of light sources each in the form of a rectangular frame **242** carrying four light emitting elements (e.g., LEDs) **244a**, **244b**, **244c** and **244d** which are accommodated at the upper corners of the frame **242**, respectively, aimed at providing the propagation of their central beams at the opposite corners. The inner surfaces **242a-242d** of the frame **242** are mirrors. The frame **242** is vertically aligned with the corresponding field lens **34**. The construction is such that the projection of the field of view **F** of the corresponding sensor (not shown) occupies the central region of the frame. The light emitting elements **244a-244d** are accommodated in the focal plane of the field lens **34**. Each light emitting element emits a beam **B**, which slightly diverges, e.g., within the angle of 14°, and, while propagating towards the lens **34** through the frame **242**, is sequentially reflected from two adjacent mirrors located opposite (along the diagonal axis) to the corresponding light emitting element.

As better shown in Fig. 4h, the opposite, periphery light components **B**_{**1**} and **B**_{**2**} of the diverging beam **B** (solid angle) emitted by the light emitting element **244a** impinge onto the mirrors **242c** and **242d**, and being reflected therefrom, fall onto the mirrors **242d** and **242c**, respectively, which, in turn, reflect the light components **B**_{**2**} and **B**_{**1**} towards the lens **34**. As a result light beams emitted by all the emitting elements end propagating as described above impinge onto the field lens **34** at the substantially near 45°-angle, which lens produces collimated beams of 45°-azimuth angle of incidence. This construction provides the dark-field illumination of an area within the entire field of view **F** of the area sensor, with the desired uniformity of illumination.

It should be noted that the provision of the illumination assembly operating in the dark-filed illumination mode is optional. Should this assembly be used, its operation is timely separated from the operation of the bright-field illumination assembly **24**, and it may be operated selectively. In other words, whilst continuously inspecting the wafer using the illumination assembly **24**, at selective locations on the wafer (strips), the operation of the assembly **24** is halted and the dark-field illumination assembly is switched-on. These selective locations may be those, where a potential defect has been detected during the bright-field illumination mode of the system **12**, or a real defect is expected, which is usually the case when dealing with such patterned workpieces as wafers.

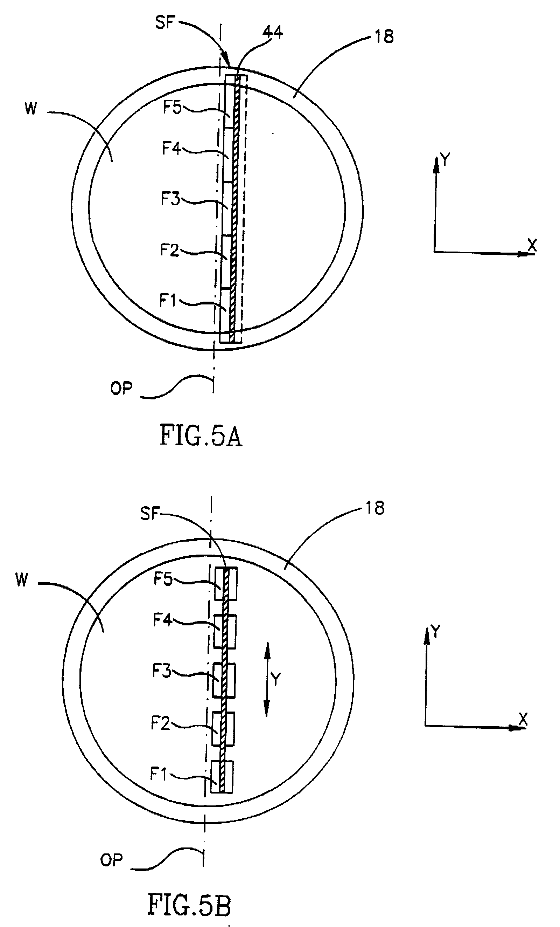

Referring to Figs. 5a and 5b, there are illustrated two different examples of a scanning technique suitable to be used in the present invention, aimed at inspecting a strip-like scanning field **SF** on the wafer by all the sensors **AS**_{**1**}**-AS**_{**5**}. As shown in Fig. 5a, the fields of view **F**_{**1**}**-F**_{**5**} of the sensors **AS**_{**1**}**-AS**_{**5**} are aligned along the **Y**-axis and define together a continuous scanning field **SF** that extends along the wafer's diameter. The movement of the housing **22** along the **X**-axis is such so as to provide a small overlap region **44** between the scanning fields of each two locally adjacent positions of the sensors **AS**_{**1**}**-AS**_{**5**}.

In the example of Fig. 5b, at each current position of the sensors **AS**_{**1**}**-AS**_{**5**} along the **X**-axis, the entire scanning field is formed by the fields of view **F**_{**1**}**-F**_{**5**} of all the sensors **AS**_{**1**}**-AS**_{**5**}. These fields of view cover a corresponding number (five in the present example) spaced-apart areas aligned along the **Y**-axis, rather than the overlapping areas as in the previously described example In other words, such a scanning field is "discontinuous". This is associated with the fact that the specular reflection from a patterned article, such as wafer, will unavoidably require the field lens to be at least slightly larger than the field of view of the area sensor, which creates the spaces between the fields of views of the adjacent sensors. When dealing with the detection of non-specular reflected light (Lambertian), the example of Fig. 5a provides sufficient results. To cover the spaces between the locally adjacent areas, thereby providing the continuous scanning field **SF**, additional step-like movement of the optics (and, optionally, the corresponding sensors) is provided along the **Y**-axis, with a pitch not less than the space between the areas (preferably, slightly exceeding this space).

Turning back to Fig. 3a, a so-called "calibration target" is formed along a strip **23** on the window **22a**. The calibration target **23** serves for calibrating the sensors prior to inspection, for example, correcting the non-uniformity of illumination, etc.

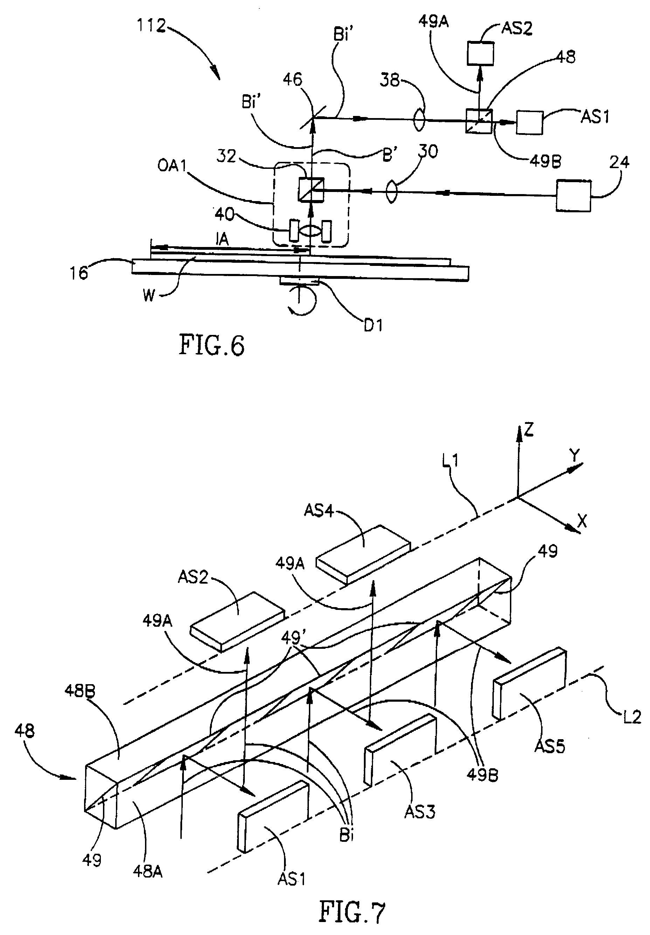

Reference is made to Fig. 6, illustrating an optical inspection system **112** constructed according to another embodiment of the invention, suitable to be used in the photolithography tools arrangement of either of Figs. 2a or 2b. Similarly, the same reference numbers are used for identifying common components of the systems **12** and **112**, and the beam propagation is shown schematically. A scanning apparatus **116** of the system **112** has a somewhat different construction as compared to that of the system **12**. Here, the following elements are accommodated inside the housing **22**: optical assemblies **OA**_{**1**}**-OA**_{**5**}, illumination assembly **40**, sensors **AS**_{**1**}**-AS**_{**5**}, a plurality of mirrors **46** (or a single elongated mirror) aligned along the **Y**-axis above the optical assemblies, imaging tube lenses **38** and an additional light directing assembly **48**. It should be noted, although not specifically shown here, that the drive mechanism **D**_{**2**} is also mounted inside the housing **22** and is coupled to the optical assemblies **OA**_{**1**}**-OA**_{**5**} and to the mirror(s) **46** for driving the reciprocation movement thereof. Additionally, in the system **112**, in distinction to the previously described embodiment, the sensors **AS**_{**1**}**-AS**_{**5**} are stationary mounted inside the housing **22**, rather than being mounted for movement together with the optical assemblies **OA**_{**1**}**-OA**_{**5**}. The additional light directing assembly **48** serves for dividing the returned light components **B**_{**i**}**'** reflected from the mirror **46** into two groups **49a** and **49b** propagating, respectively, along the **Z**- and **X**-axes.

As shown in Fig. 7, the sensors **AS**_{**1**}**-AS**_{**5**} are aligned in two parallel lines **L**_{**1**} and **L**_{**2**} which extend along the **Y**-axis and are spaced from each along the **X**-and **Z**-axes. Each two adjacent sensors are spaced from each other along the **X**-and **Z**-axes. The light directing assembly **48** is in the form of a parallelepiped, which is substantially optically transparent, except for spaced-apart reflective regions **49b** formed on its inner diagonal surface **49**.

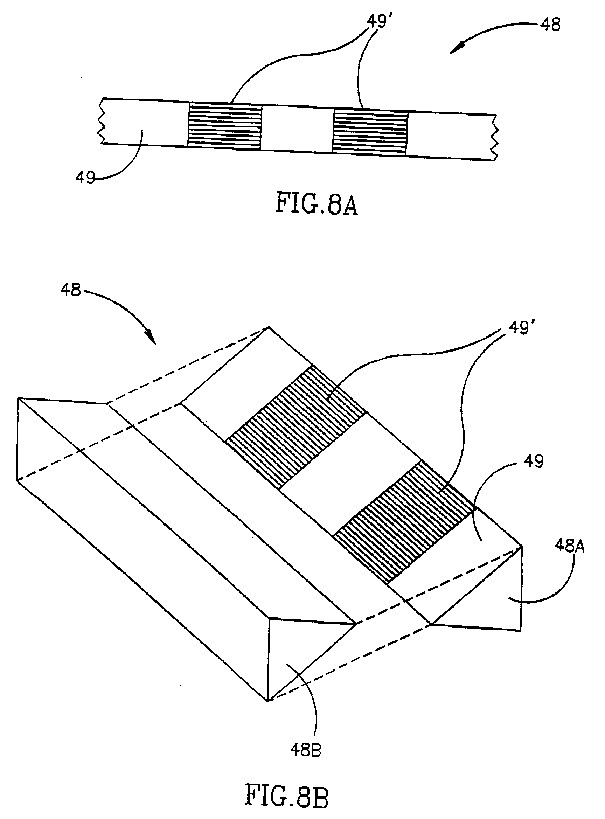

As shown in Figs. 8a and 8b, the light directing assembly **48** may be constructed by attaching a pair of parallel sides of a pair of symmetrically identical triangular prisms **48a** and **48b** to each other. One of these parallel sides has the patterned surface **49**. The pattern may, for example, be made by depositing a reflective material onto the regions **49a** through a mask. It should be noted, although not specifically shown, that beam-splitter cubes may replace the prisms **48a** and **48b**.

The operation of the system **112** is generally similar to that of the system **12**. The moving elements (i.e., the optical elements **OA**_{**1**}**-OA**_{**5**}, mirror(s) **46**, and, optionally, the illumination assembly **40**) step-by-step move along the **X**-axis between the center region and the periphery region of the wafer (i.e., within the inspection area **IA**). One half of the wafer is strip-by-strip inspected. Then, the stage **16** rotates by 180° parallel to the inspection plane **IP**, resulting in that the other half of the wafer is positioned within the inspection area **IA**, and the inspection is repeated by step-by-step moving the respective elements from the periphery region of the wafer towards its center region.

It is understood that the moving elements may be returned to their initial position above the center region of the wafer prior to starting the inspection of the second half of the wafer. Thus, the inspection proceeds from the center region to the periphery region of the wafer.

With regard to the example of Fig. 5b, it should be understood that various operational modes are possible. For example, after completing the scanning of the half of the wafer by step-by-step movements along the **X**-axis, the fields of view of the sensors are shifted along the **Y**-axis and the inspection area **IA** is passed with this shifted position of the fields of view. In this case, the sensors may and may not be returned into their initial position relative to the wafer prior to the shifting procedure. An alternative operational mode consists of step-by-step performing the **Y**-axis shift of the fields of view for each sensors' position along the **X**-axis.

It should be noted that, generally, the number of area sensors, and, accordingly, of the optical assemblies, suitable to be used in the system **12**, **112** is dictated by the dimensions of the wafer to be inspected and the desired image resolution. For example, if a standard 200mm wafer should be inspected with the resolution of 50µm, eight commercially available TV cameras (i.e., each having approximately 500x600 pixels) may be used as the area sensors. In this case, since these cameras operate with the frequency of 60 frames per second, the scanning time at each relative location of the moving components relative to the wafer (i.e., for each illuminated strip) is approximately 170msec, the time for moving these elements from strip to strip is about 0.5sec, the inspection area (one half of the wafer) includes four illuminated strips (considering the overlap regions), and the total inspection time for the entire wafer is about 5.4sec. Taking into consideration the time required for such additional operations as loading/unloading of the wafer, rotation of the stage, calibration, etc., total inspection time per wafer would be about 10sec. It is understood that such brief inspection time would not affect the throughput of the photolithography tools arrangement, nor would it impede the regular operation of the robot.

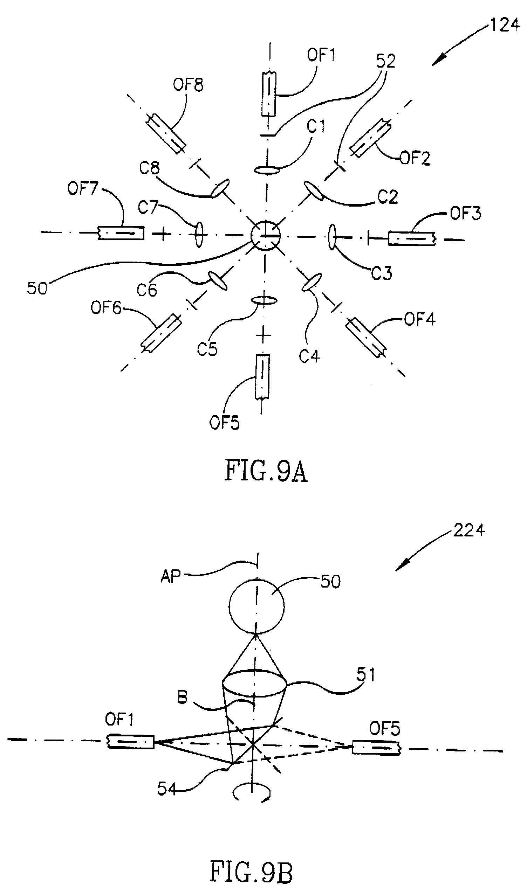

According to the present invention, a large area of the wafer (i.e., a strip extending along the entire diameter of the wafer) should be illuminated at each relative location of the optical assemblies relative to the wafer **W**. As indicated above, the illumination assembly may comprise a suitable number of light sources. However, to avoid the requirement for significantly high illumination energy, and also to prevent overlapping between the neighboring illuminated areas which produces undesirable non-uniformity of the illumination, a single light source equipped with suitable light splitting means capable of producing a plurality of incident light components may be provided. Figs. 9a and 9b illustrate two possible constructions of such an illumination assembly having a single light source.

In the example of Fig. 9a, an illumination assembly **124** comprises a lamp **50** associated with a plurality of condensers **C**_{**1**}**- C**_{**8**} and optical fibers **OF**_{**1**}**-OF**_{**8**} (constituting a light guiding means), eight in the present example, considering eight cameras and eight optical assemblies. Eight shutters, generally at **52**, are provided, each associated with a corresponding one of the optical fibers. The shutters may be of either mechanical or electrooptical type.

The provision of the shutters **52** is aimed at the following. Whilst illuminating the plurality of regions within the illuminated strip **S** through separate field lenses **34**, a certain overlap of two locally adjacent illuminated regions occurs, unavoidably resulting in the non-uniform illumination within such an overlapping area. To avoid this effect, the array of the regions within the strip **S** may be illuminated sequentially, by sequentially opening the shutters **52**. Alternatively, the shutters may be operated in such a manner that the regions illuminated at each time unit are disposed in a so-called "chess-board" order, thereby enabling the interlaced illumination. It should be noted that such shutters enabling the sequential illumination of the array of regions within the strip or the interlaced illumination of these regions may also be used with a plurality of separate light sources.

Fig. 9b illustrates a section view of an illumination assembly **224** having a somewhat different construction as compared to the assembly **124**. The assembly **224**, similarly to the assembly **124**, includes the lamp **50**, a condenser **51** and a plurality of optical fibers (fibers **OF**_{**1**} and **OF**_{**5**} are shown in the figure), but is also provided with a mirror **54**. The mirror **54** is mounted in the optical path of a primary beam **B**, and is rotatable, preferably step-by-step, about an axis **AP** of propagation of the beam **B** towards the mirror **54**, by a suitable driver (not shown). In other words, the mirror **54** is oriented at 45° to the vertical axis **AP**, and rotates in the horizontal plane, the input faces of the optical fibers being arranged in a spaced-apart relationship in the horizontal plane. Thus, the rotation of the mirror **54** will result in the sequential illumination of the input faces of the optical fibers and, consequently, the regions within the strip **S**. For example, when using ten conventional TV cameras, with the scanning time per one strip being about 128µs, the frequency of the rotation of the mirror **54** is about 7Hz. The synchronization of the rotation of the mirror **54** from one fiber to the adjacent fiber, as well as the synchronization of the shutter's operation, are controlled either by the programming means of the control unit **26** or by optical sensors appropriately provided.

It should also be noted that, when dealing with a circular workpiece (e.g., wafer), only the inspection of the central strip extending along the diameter of the workpiece, needs the entire set of cameras to be operated for inspection. Thus, for saving the overall inspection time, whilst inspecting periphery strips of the circular workpiece, only some of the cameras (i.e., centrally located within the array of the cameras) may actually be engaged in the inspection process. An additional synchronization utility of the control unit **26** may operate for preventing imaging by the periphery detection channels.

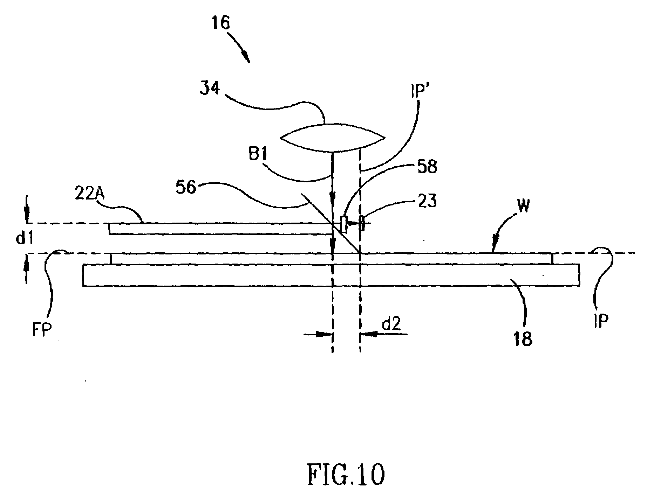

One more feature of the present invention will now be explained with reference to Fig. 10, which partly illustrates the scanning apparatus **18**. It is understood that the wafer **W** under inspection is located in a focal plane **FP** of the objective lens assemblies (shown here as field lenses **34**). As indicated above, the calibration pattern **23** is provided serving for calibrating the sensors prior to inspection, and should therefore be also located in the focal plane **FP**. For this purpose, the calibration pattern **23** extends parallel to the inspection plane **IP** but is located in a plane **IP'** perpendicular thereto, and a mirror **56** is accommodated in the optical path of the incident beam ensuing from the field lens **34**. The location of the mirror is selected such as to ensure that the optical distance **d**_{**1**} between the optical window **22A** and the wafer (i.e., the focal plane **FP**) is equal to the distance **d**_{**2**} between the plane **IP'** and a point **56A** of incidence of the beam **B**_{**1**} onto the mirror **56**. The mirror **56** is mounted stationary, and therefore does not impede the inspection of the half of the wafer through the moving optical assemblies. As shown in Fig. 10, a glass-piece **58** is preferably accommodated in the optical path of the incident beam **B**_{**1**} on its way towards the calibration pattern **23**. This enables to obtain substantially identical conditions for light propagation during the inspection and calibration procedures.

The advantages of the present invention are self-evident. The optical inspection system constructed and operated according to the invention, is compact, provides for maintaining the wafer stationary during the inspection and utilizes a rigid and very stable scanning apparatus capable of fast scanning of the wafer. The scanning apparatus is fully separated from the photolithography environment owing to the fact that all moving components of the scanning apparatus are located within the sealed housing **22**, while the control unit **26** and illumination assembly **24** are located outside the track clean area. As indicated above, the optical inspection system according to the invention has the option to be bypassed by the production process and to be simultaneously operated in off-line or integrated modes.

It will be appreciated by persons skilled in the art that the present invention is not limited to the control of the photolithography process applied to silicon-based wafers. Rather, any of the embodiments described hereinbefore and any modifications thereof may be employed, for example, for controlling the etching process, CVD, etc. Various modifications and changes may be applied to the preferred embodiments of the invention as hereinbefore exemplified without departing from its scope as defined in and by the appended claims.

## Claims

1. An optical inspection system (12, 112) for detecting defects on a substantially flat workpiece (W) having an axis of symmetry (OP), the system comprising a stage (18) supporting said workpiece in an inspection plane (IP), and a scanning apparatus (16, 116) accommodated above said workpiece, wherein:
**(a)** said stage (18) is mounted for rotation in a plane parallel to said inspection plane (IP);
**(b)** said scanning apparatus (16, 116) comprises:
an illumination assembly (24, 124, 224) producing a plurality of incident radiation components, each component illuminating a corresponding one of a plurality of regions of the workpiece (W) within a strip (S) illuminated by said plurality of incident radiation components, the strip (S) extending parallel to the axis of symmetry (OP) of the workpiece (W) between two opposite sides thereof;
a plurality of optical assemblies (OA) accommodated above said workpiece (W), each optical assembly directing a corresponding one of a plurality of radiation components returned from the corresponding illuminated region away from the workpiece, wherein the optical assemblies are aligned along said axis of symmetry (OP) in a spaced-apart parallel relationship, and are mounted for reciprocating movement within a plane parallel to an inspection area (IA), said inspection area covering substantially a half of the workpiece;
**(c)** a plurality of area sensors (AS) are arranged in a predetermined manner, each area sensor being associated with a corresponding one of the optical assemblies for receiving the component of the returned radiation and generating data representative thereof;
**(d)** a first drive mechanism (D₁) is coupled to said optical assemblies (OA) for driving said reciprocating movement thereof; and
**(e)** a second drive mechanism (D₂) is coupled to said stage (18) for driving said rotation thereof.

2. The system according to Claim 1, wherein said illumination assembly (24, 124, 224) operates in a bright-field illumination mode.

3. The system according to Claim 1, wherein said plurality of optical assemblies (OA) are mounted for the reciprocating movement along an axis perpendicular to the axis of symmetry (OP), overlapping being provided between fields of view of each two adjacent area sensors (AS).

4. The system according to Claim 3, wherein said plurality of optical assemblies (OA) are mounted for the reciprocating movement along an axis parallel to the axis of symmetry (OP), the field of views of the plurality of area sensors (AS) being aligned in a spaced-apart relationship along an axis parallel to the axis of symmetry (OP).

5. The system according to Claim 1, wherein said illumination assembly (24) comprises a plurality of light sources producing said components of the incident radiation and directing each of said components onto a corresponding one of the optical assemblies (OA).

6. The system according to Claim 1, wherein said illumination assembly (124) comprises a single light source (50) producing a plurality of light components, and a plurality of light guiding means (OF), each receiving a corresponding one of the light components and directing it towards the corresponding optical assembly.

7. The system according to Claim 6, wherein the light source is a lamp (50), and the guiding means are optical fibers (OF).

8. The system according to Claim 1, wherein said illumination assembly (224) comprises a single light source (50) producing a light component (B), a plurality of light guiding means (OF), and a light directing element (54) for sequentially directing the light component to a corresponding one of the light guiding means (OF).

9. The system according to Claim 8, wherein said light source is a lamp (50), said guiding means are optical fibers (OF), and said light directing means (54) is a rotatable mirror.

10. The system according to Claim 2, and also comprising an additional illumination assembly (40, 140, 240) producing additional incident radiation and operating in a dark-field illumination mode.

11. The system according to Claim 10, wherein said additional illumination assembly (40, 140, 240) is mounted for the reciprocating movement together with the optical assemblies (OA).

12. The system according to Claim 10, wherein said additional illumination assembly extends along said axis of symmetry (OP).

13. The system according to Claim 10, wherein said additional illumination assembly (40, 140, 240) comprises a plurality of light sources, each associated with a corresponding one of the optical assemblies (OA).

14. The system according to Claim 13, wherein each of the light sources comprises a plurality of light emitting elements (142, 244) associated with light directing means (144, 242), so as to provide a substantially 45°-angle of incidence of the light component emitted by the light emitting element onto the workpiece.

15. The system according to Claim 14, wherein the light directing means (144, 242) is in the form of a plurality of rectangular frames, each frame corresponding to one of the area sensors, the projection of the field of view of said area sensor occupying a central region of a horizontal frame defined by said frame.

16. The system according to Claim 15, wherein each side of said frame is formed by a two-dimensional matrix of substantially small lenses (144), contact being provided between each two adjacent lenses, each of said light emitting element (142) being located within a corresponding one of spaces between the lenses.

17. The system according to Claim 15, wherein
each of said frames (242) is accommodated above a field lens (34) of the corresponding one of the optical assemblies (OA);
inner sides of said frame are mirrors (242A-242D); and
the four light emitting elements (244A-244D) are accommodated at the upper corners of the frame so as to be in a focal plane of the corresponding field lens of the corresponding optical assembly.

18. The system according to Claim 1, wherein each of said optical assemblies (OA) comprises a field lens (34) and a beam splitter (32).

19. The system according to Claim 1, wherein each of the area sensors (AS) is an area CCD.

20. The system according to Claim 1, wherein said area sensors (AS) are arranged in a line parallel to said axis of symmetry (OP), and are associated with the optical assemblies (OA) for the reciprocating movement together with the optical assemblies.

21. The system according to Claim 1, wherein said area sensors (AS) are arranged in two parallel lines parallel to the axis of symmetry (OP), such that each two adjacent sensors are spaced from each other along two mutually perpendicular axes, a light directing means (48) being provided for receiving the components of the returned radiation ensuing from the optical assemblies and directing them onto the area sensors.

22. A photolithography tools arrangement (10) for processing a stream of substantially flat workpieces (W) progressing on a production line, the tools arrangement comprising an optical inspection system (12) for detecting defects on the workpiece of a kind having an axis of symmetry (OP), the system comprising a stage (18) supporting said workpiece in an inspection plane (IP), and a scanning apparatus (16) accommodated above said workpiece, wherein:
- said stage is mounted for rotation in a plane parallel to said inspection plane;
- said scanning apparatus comprises:
an illumination assembly (24, 124) producing a plurality of incident radiation components, each component illuminating a corresponding one of a plurality of regions of the workpiece within a strip (S) illuminated by said plurality of incident radiation components, the strip extending parallel to the axis of symmetry of the workpiece between two opposite sides thereof;
a plurality of optical assemblies (OA) accommodated above said workpiece, each optical assembly directing a corresponding one of a plurality of radiation components returned from the corresponding illuminated region away from the workpiece, wherein the optical assemblies are aligned along said axis of symmetry in a spaced-apart parallel relationship, and are mounted for reciprocating movement within an inspection area (IA) along axes perpendicular to said axis of symmetry, said inspection area covering substantially a half of the workpiece;
- a plurality of area sensors (AS) arranged in a predetermined manner, each area sensor being associated with a corresponding one of the optical assemblies for receiving the component of the returned radiation and generating data representative thereof;
- a first drive mechanism (D₁) coupled to said optical assemblies for driving said reciprocating movement thereof; and
- a second drive mechanism (D₂) coupled to said stage for driving said rotation thereof.

23. A method for inspecting a substantial flat workpiece (W) having an axis of symmetry (OP), the method comprising the steps of:
(i) locating the workpiece within an inspection plane (IP);
(j) illuminating a plurality of regions of the workpiece by a plurality of incident radiation components and producing a plurality of light components returned from the plurality of illuminated regions, the illuminated regions forming an illuminated strip (S) extending parallel to the axis of symmetry between two opposite sides of the workpiece;
(k) directing each of the plurality of light components returned from the illuminated regions through a plurality of optical assemblies (OA) aligned in a line parallel to the axis of symmetry above the workpiece;
(l) detecting light components returned from the illuminated regions by a corresponding plurality of area sensors (AS);
(m) moving said plurality of optical assemblies relative to said workpiece within a plane parallel to the inspection plane, such as to illuminate successive strips on the workpiece and detect light components returned therefrom;
(n) repeating steps (j) to (m) for strip-by-strip inspection of the workpiece within an inspection area (IA) that covers substantially a half of the workpiece;
(o) rotating said workpiece by 180° and repeating steps (j) to (n).

24. The method according to Claim 23, wherein said step (j) comprises sequential illumination of the plurality of the regions.

25. The method according to Claim 23, wherein said step (j) comprises selective illumination of some of said plurality of regions.

26. The method according to Claim 25, wherein said selective illumination is such as to prevent overlapping of two simultaneously illuminated regions.

27. The method according to Claim 23, wherein said moving comprises providing a reciprocating movement of the plurality of optical assemblies along an axis perpendicular to the axis of symmetry, overlapping being provided between fields of view of each two adjacent area sensors.

28. The method according to Claim 27, wherein said moving comprises providing a reciprocating movement of the plurality of optical assemblies along an axis parallel to the axis of symmetry, the fields of view of the area sensors being aligned in a spaced-apart parallel relationship along an axis parallel to the axis of symmetry.
